# EUROPÄISCHE PATENTANMELDUNG

(11) **EP 3 141 757 A1**
(43) Veröffentlichungstag der Anmeldung: **15.03.2017**
(21) Anmeldenummer: 15184175.6
(22) Anmeldetag: 08.09.2015
(51) Int. Cl.: F04D 25/08, F04D 29/44, F04D 29/58, F04D 17/16, F04D 29/42, F04D 29/66, H02K 9/16, H02K 9/06, H02K 5/20

(54) **TURBO-LÜFTER MIT KÜHLKÖRPER**

(71) Anmelder: Micronel AG, 8317 Tagelswangen (CH)
(72) Erfinder: MEIER, Peter, 8320 Fehraltorf (CH); ALBISSER, Dieter, 5426 Lengnau (CH)
(74) Vertreter: Rutz, Andrea

(57) **Zusammenfassung**

Es wird ein Lüfter mit einem Motor (12), einem Lüfterrad (14), einem Kühlkörper (11) und einem Gehäuse (10) angegeben. Der Motor (12) ist elektrisch angetrieben und weist einen Stator (122) und einem um eine Drehachse (DA) drehbar gelagerten Rotor (121) auf, wobei der Motor (12) zumindest eine im Betrieb stromdurchflossene Wicklung (1221) aufweist. Das Lüfterrad (14) ist drehfest am Rotor (121) befestigt und dient zum Ansaugen und Befördern von einem gasförmigen Medium. Der Kühlkörper (11) hat eine Innenwand (111), welche einen Innenraum (112) zur Aufnahme des Motors (12) begrenzt, sowie Luftleitelemente (113), welche sich jeweils in Axialrichtung (AR) über einen Grossteil der Längserstreckung der stromdurchflossenen Wicklung (1221) erstrecken, um das vom Lüfterrad (14) beförderte gasförmige Medium zwecks Motorkühlung am Kühlkörper (11) entlang zu leiten. Das Gehäuse (10) weist eine Aussenwand (101) auf, welche einen Hohlraum (102) zur Aufnahme des Kühlkörpers (11) und des Motors (12) begrenzt.

## Beschreibung

### TECHNISCHES GEBIET

Die vorliegende Erfindung betrifft einen Lüfter mit einem Lüfterrad zum Ansaugen und Befördern von einem gasförmigen Medium. Der Lüfter kann zum Beispiel zur Luftabsaugung, zur Erzeugung eines Luftstroms und/oder zur Erzeugung eines Überdrucks und/oder eines Unterdrucks von Luft oder eines anderen gasförmigen Mediums dienen.

### STAND DER TECHNIK

Lüfter, zu denen insbesondere auch Ventilatoren, Gebläse und Verdichter zählen, sind seit langem bekannt und werden in unterschiedlichsten Anwendungen eingesetzt. Lüfter weisen ein üblicherweise elektrisch angetriebenes Lüfterrad auf, welches in einem Gehäuse rotiert und dadurch ein gasförmiges Medium, wie insbesondere Luft, fördert und verdichtet.

Neben den aerodynamischen Werten spielen bei Lüftern insbesondere das Lüftervolumen, das Gesamtgewicht, das Vibrationsverhalten und die dadurch resultierende Akustik eine wichtige Rolle. Eine zentrale Rolle beim Design von elektrisch angetriebenen Lüftern spielt insbesondere eine ausreichende Kühlung des Elektromotors.

Die DE 10 2013 102 755 A1 offenbart ein Gebläse, bei welchem die von einem Lüfterrad angesaugte Luft mittels eines Diffusors durch ein Motorgehäuse geleitet wird, um den darin angeordneten Elektromotor zu kühlen.

Bei dem in der WO 97/30621 gezeigten Lüfter wird die angesaugte Luft zur Motorenkühlung einerseits durch das Motorgehäuse hindurch und andererseits entlang der Aussenseite des Motorgehäuses geleitet.

In der DE 10 2013 104 849 A1 wird ein Lüfter gezeigt, bei welchem die von einem Lüfterrad beförderte Luft mittels Leitschaufeln entlang einer den Motor umgebenden inneren Wand geführt wird. Die innere Wand weist Durchbrüche auf, so dass die Luft zum Motor gelangen und diesen kühlen kann.

Indem bei den Lüftern, welche in den oben erwähnten Dokumenten des Standes der Technik offenbart sind, jeweils die vom Lüfterrad beförderte Luft direkt am Elektromotor entlangströmt, kann eine effiziente Motorkühlung erreicht werden. Allerdings wird die Luft beim Entlangströmen am Motor jeweils stark verwirbelt, was nicht nur eine Beeinträchtigung der Aerodynamik des Lüfters mit sich bringt, sondern auch zu verstärkten Vibrationen und Schall führt.

### DARSTELLUNG DER ERFINDUNG

Es ist also eine Aufgabe der vorliegenden Erfindung, einen leistungsstarken Lüfter mit einer effizienten Motorkühlung anzugeben, der zudem möglichst geräusch- und vibrationsarm ist sowie eine einfache Konstruktion aufweist. Zur Lösung dieser Aufgabe wird ein Lüfter vorgeschlagen, wie er in Anspruch 1 angegeben ist. Vorteilhafte Ausgestaltungen der Erfindung sind in den abhängigen Ansprüchen angegeben.

Die vorliegende Erfindung stellt also einen Lüfter zur Verfügung, aufweisend
einen elektrisch angetriebenen Motor mit einem Stator und einem um eine Drehachse drehbar gelagerten Rotor, wobei aufgrund der Drehachse eine Radial- und eine Axialrichtung des Lüfters definiert sind, und wobei der Motor zumindest eine im Betrieb stromdurchflossene Wicklung aufweist;
ein drehfest am Rotor befestigtes Lüfterrad zum Ansaugen und Befördern von einem gasförmigen Medium;
einen Kühlkörper mit einer Innenwand, welche einen Innenraum zur Aufnahme des Motors begrenzt, sowie mit Luftleitelementen, welche sich jeweils in Axialrichtung über einen Grossteil der Längserstreckung der stromdurchflossenen Wicklung erstrecken, um das vom Lüfterrad beförderte gasförmige Medium zwecks Motorkühlung am Kühlkörper entlang zu leiten; sowie
ein Gehäuse mit einer Aussenwand, welche einen Hohlraum zur Aufnahme des Kühlkörpers und des Motors begrenzt.

Beim gasförmigen Medium handelt es sich üblicherweise um Luft. Selbstverständlich können je nach Anwendung aber auch beliebige andere gasförmige Medien verwendet werden.

Die im Lüfterbetrieb vom Motor und insbesondere von der stromdurchflossenen Wicklung produzierte thermische Energie wird vom Stator aus dem Innenraum auf die Innenwand des Kühlkörpers übertragen. Da die Innenwand bevorzugt mit ihrer Innenfläche direkt am Motor anliegt, erfolgt diese Übertragung auf eine besonders effiziente Weise. Indem die Luftleitelemente das vom Lüfterrad beförderte gasförmige Medium am Kühlkörper entlang leiten, kann die thermische Energie vom Kühlkörper auf das gasförmige Medium übertragen und von diesem aus dem Lüfter nach aussen befördert werden. Üblicherweise dienen die Luftleitelemente dabei nicht nur zum Leiten des Gas- bzw. Luftstroms, sondern weisen gleichzeitig auch die Funktion von Kühlrippen auf. Die Luftleitelemente dienen in der Regel also auch dazu, die Oberfläche des Kühlkörpers zu vergrössern, um eine noch effizientere Wärmeübertragung auf das gasförmige Medium zu erreichen. Da sich die Luftleitelemente in Axialrichtung über einen Grossteil der Längserstreckung der stromdurchflossenen Wicklung erstrecken, wird eine gute Wärmeabführung entlang der gesamten Längserstreckung des Motors erreicht.

Die Aussenseite des Kühlkörpers ist bevorzugt derart ausgestaltet, dass eine effiziente Wärmeübertragung auf das am Kühlkörper entlang strömende gasförmige Medium bei einer gleichzeitig optimalen Aerodynamik erreicht wird. Um Verwirbelungen des gasförmigen Mediums möglichst zu vermeiden, weist die Aussenseite des Kühlkörpers vorteilhaft zumindest im Bereich der Luftleitelemente eine in Axialrichtung durchgehend glatte und bevorzugt geschlossene Oberfläche auf. Vorteilhaft erstrecken sich die Luftleitelemente jeweils geradlinig entlang der Axialrichtung.

Das vom Lüfterrad beförderte gasförmige Medium kann somit den Bereich des Hohlraums zwischen der Innenwand des Kühlkörpers und der Aussenwand des Gehäuses durchströmen. Dieser vom gasförmigen Medium durchströmte Bereich des Hohlraums, welcher auch als Strömungsraum bezeichnet werden kann, bildet bevorzugt einen von den Luftleitelementen in Umfangsrichtung mehrfach unterbrochenen Ringraum. Aufgrund der Luftleitelemente ist vorteilhaft eine Vielzahl von Luftleitkanälen ausgebildet, welche in Umfangsrichtung jeweils von zwei Luftleitelementen und in Radialrichtung von der Innenwand des Kühlkörpers sowie von der Aussenwand des Gehäuses begrenzt sind. Die Luftleitkanäle erstrecken sich bevorzugt jeweils geradlinig und parallel zur Drehachse. Vorteilhaft erstrecken sich die Luftleitkanäle zudem über einen Grossteil der Längserstreckung des Kühlkörpers in Axialrichtung sowie insbesondere über einen Grossteil der Längserstreckung, besser sogar über die gesamte Längserstreckung des Motors.

Der Lüfter eignet sich insbesondere für Anwendungen, bei denen ein hoher Druck bzw. Unterdruck und/oder ein hoher Durchsatz des gasförmigen Mediums benötigt werden. Derartige Anwendungen betreffen zum Beispiel Positioniersysteme mit sogenannten Pickand-Place Geräten. Der Lüfter wird bei solchen Geräten verwendet, um Produkte mittels Vakuumerzeugung zu ergreifen und zu bewegen. Der Lüfter kann beispielsweise aber auch im Handling von Papier oder Textilien zum Einsatz kommen. Auch kann der Lüfter in der Belüftungstechnik von Bioreaktoren oder Kleinkläranlagen verwendet werden. Eine weitere Anwendungsmöglichkeit stellen Staubsauger und Luftmesser dar, wie sie zum Beispiel bei Handtrocknern oft eingesetzt werden. Eine Verwendung des Lüfters ist ferner auch bei Dieselmotoren zur Optimierung der Dieselverbrennung (Nachverbrennung) oder bei Brennstoffzellen denkbar.

Der Kühlkörper ist bevorzugt als Ganzes einstückig und aus einem gut wärmeleitenden Material, insbesondere aus Metall, ausgebildet.

Vorteilhaft weist die Innenwand des Kühlkörpers eine hohlzylindrische Innenfläche und der Motor eine zylindrische Aussenfläche auf. Bevorzugt weist zudem auch die Aussenwand eine hohlzylindrische Innenfläche auf.

Bevorzugt erstrecken sich die Luftleitelemente jeweils in Axialrichtung über einen Grossteil der Längserstreckung des Stators, insbesondere der Statorwicklung. Bei der stromdurchflossenen Wicklung kann es sich somit insbesondere um die Statorwicklung handeln. Noch bevorzugter erstrecken sich die Luftleitelemente jeweils in Axialrichtung über die gesamte Längserstreckung des Stators, insbesondere der Statorwicklung. Am bevorzugtesten erstrecken sich die Luftleitelemente jeweils in Axialrichtung sogar über einen Grossteil der Längserstreckung des Motors, insbesondere über die gesamte Längserstreckung des Motors. Die Luftleitelemente können sich jeweils in Axialrichtung sogar zu einer oder beiden Seiten hin über die gesamte Längserstreckung des Motors hinaus erstrecken. Die Wärmeenergie kann dadurch optimal vom Motor abgeführt werden.

Die Innenwand des Kühlkörpers umschliesst den Stator vorteilhaft entlang seiner gesamten Längserstreckung. Der Motor ist somit bevorzugt vollständig im Innenraum des Kühlkörpers aufgenommen und insbesondere in Umfangs- und Axialrichtung, das heisst über die gesamte Längserstreckung des Motors, vollständig von dessen Innenwand umschlossen.

Das Lüfterrad ist vorteilhaft dazu ausgebildet, das angesaugte gasförmige Medium radial nach aussen zu befördern. Das Lüfterrad kann dann auch als Radialverdichter bezeichnet werden. Eine Umlenkung des Luftstroms in die Axialrichtung erfolgt luftstromabwärts anschliessend an das Lüfterrad bevorzugt durch eine seitliche Begrenzung des Luftstroms durch das Gehäuse.

Um das vom Lüfterrad beförderte gasförmige Medium in die Axialrichtung zum Kühlkörper hin umzulenken, ist zudem bevorzugt entlang der Axialrichtung zwischen dem Lüfterrad und dem Kühlkörper ein Diffusor vorgesehen. Der Diffusor weist vorteilhaft Leitschaufeln auf, welche das vom Lüfterrad beförderte gasförmige Medium derart umlenken, dass dieses ausschliesslich in die Axialrichtung strömt und somit keine weiteren Strömungskomponenten in andere Richtungen, insbesondere in die Umfangsrichtung, mehr aufweist.

Die Leitschaufeln des Diffusors weisen vorteilhaft jeweils ein zum Lüfterrad hin gewandtes Ende mit einer spitz zulaufenden Kante auf. Dadurch können Verwirbelungen des gasförmigen Mediums im Bereich des Diffusors weitgehend vermieden werden.

Bevorzugt ist jedem der Luftleitelemente des Kühlkörpers jeweils eine Leitschaufel des Diffusors zugeordnet. Um eine optimale Aerodynamik zu erreichen, schliessen die Luftleitelemente dabei vorteilhaft jeweils in Axialrichtung an die Leitschaufeln an und gehen bündig in diese über.

Bevorzugterweise handelt es sich beim elektrisch angetriebenen Motor um einen bürstenlosten Gleichstrommotor. In einer insbesondere bevorzugten Ausführungsform weist der Lüfter einen Elektromotor auf, wie er in der EP 2 180 581 offenbart ist, deren Offenbarung hiermit unter Bezugnahme vollständig in die vorliegende Beschreibung integriert wird.

Zur Lagerung des Rotors ist in der Regel zumindest ein in einem Lagerungselement befestigtes Lager vorgesehen. Beim Lager kann es sich insbesondere um ein Kugellager, bevorzugt ein vorgespanntes Kugellager, handeln. Um einen Druckausgleich zum Lager hin zu ermöglichen, weist das Lagerungselement vorteilhaft zumindest eine Druckausgleichsbohrung auf. Die Druckausgleichsbohrung dient vorteilhaft zur Herstellung einer Verbindung zwischen dem Innenraum des Kühlkörpers einerseits und dem Bereich des Hohlraums zwischen dem Kühlkörper und dem Gehäuse andererseits. Die Druckausgleichsbohrung könnte grundsätzlich auch in einem beliebigen anderen Element des Lüfters als dem Lagerungselement vorgesehen sein, solange sie die erwähnte Druchausgleichsverbindung zwischen dem Innenraum und dem Hohlraum ausserhalb des Kühlkörpers herstellen kann.

Die Innenwand des Kühlkörpers weist vorteilhaft eine Aussenfläche auf, deren Durchmesser in Axialrichtung mit zunehmendem Abstand vom Lüfterrad stetig abnimmt. Der Strömungsraum für das gasförmige Medium vergrössert sich dadurch mit zunehmendem Abstand vom Lüfterrad, also vom Hochdruckbereich des Lüfters im Bereich des Lüfterrades her zum Tiefdruckbereich im Auslassbereich des Lüfters hin. Vorteilhaft nimmt dabei der Durchmesser der Aussenfläche der Innenwand sogar entlang der im Wesentlichen gesamten Längserstreckung der Innenwand in Axialrichtung mit zunehmendem Abstand vom Lüfterrad stetig ab. Mit einer solchen Ausgestaltung der

Innenwand können optimale aerodynamische Werte erreicht werden.

Die Aussenwand des Gehäuses weist bevorzugt eine zylindrische Innenfläche auf. Die Aussenfläche der Aussenwand des Gehäuses ist ebenfalls bevorzugt zylindrisch ausgestaltet, kann aber auch im Querschnitt rechteckig und insbesondere quadratisch sein.

Um Verwirbelungen des gasförmigen Mediums zu vermeiden, weist das Gehäuse vorteilhaft einen Lufteinlass auf, welcher sich zumindest über einen gewissen Bereich in Axialrichtung zum Lüfterrad hin stetig aufweitet, und/oder weist einen Luftauslass auf, welcher sich zumindest über einen gewissen Bereich in Axialrichtung (AR) vom Lüfterrad (14) weg stetig verengt. In einem unmittelbar nach aussen hin mündenden Bereich weiten sich aber der Lufteinlass und/oder der Luftauslass bevorzugt stetig nach aussen hin auf.

Vom Gehäuse, dem Lüfterrad, dem Diffusor und dem Kühlkörper wird in der Regel gemeinsam ein Strömungsraum begrenzt, welcher im Betrieb des Lüfters vom gasförmigen Medium entlang einer Hauptströmungsrichtung durchströmt wird. Vorteilhaft, um eine optimale Aerodynamik zu erreichen, verengt sich dieser Strömungsraum entlang der Hauptströmungsrichtung im Bereich des Lüfterrades zum Diffusor hin und weitet sich im Bereich des Kühlkörpers mit zunehmendem Abstand vom Diffusor auf. Die Verengung im Bereich des Lüfterrades sowie die Aufweitung im Bereich des Kühlkörpers erfolgen vorteilhaft jeweils stetig.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Lüfters gemäss einer ersten erfindungsgemässen Ausführungsform;
- Fig. 2: eine perspektivische Ansicht des entlang einer zentralen Ebene aufgeschnittenen Lüfters der Fig. 1;
- Fig. 3: eine frontale Ansicht von vorne auf den Lufteinlassbereich des Lüfters der Fig. 1;
- Fig. 4: eine Seitenansicht des Lüfters der Fig. 1;
- Fig. 5: eine Seitenansicht des Lüfters der Fig. 1 aus einem im Vergleich zur Fig. 4 senkrecht stehenden Blickwinkel;
- Fig. 6: eine zentrale Schnittansicht in der in der Fig. 4 angegebenen Ebene A-A des Lüfters der Fig. 1;
- Fig. 7: eine zentrale Schnittansicht in der in der Fig. 5 angegebenen Ebene H-H des Lüfters der Fig. 1;
- Fig. 8: eine Querschnittansicht in der in der Fig. 4 angegebenen Ebene B-B des Lüfters der Fig. 1;
- Fig. 9: eine Querschnittansicht in der in der Fig. 4 angegebenen Ebene C-C des Lüfters der Fig. 1;
- Fig. 10: eine Querschnittansicht in der in der Fig. 4 angegebenen Ebene D-D des Lüfters der Fig. 1;
- Fig. 11: eine Querschnittansicht in der in der Fig. 4 angegebenen Ebene E-E des Lüfters der Fig. 1;
- Fig. 12: eine Querschnittansicht in der in der Fig. 4 angegebenen Ebene F-F des Lüfters der Fig. 1;
- Fig. 13: eine Querschnittansicht in der in der Fig. 4 angegebenen Ebene G-G des Lüfters der Fig. 1;
- Fig. 14: eine perspektivische Ansicht des Lüfters der Fig. 1 ohne Gehäuse;
- Fig. 15: eine Seitenansicht des Lüfters der Fig. 1 ohne Gehäuse;
- Fig. 16: eine perspektivische Ansicht des entlang einer zentralen Ebene aufgeschnittenen Lüfters der Fig. 1 ohne Gehäuse;
- Fig. 17: eine perspektivische Ansicht des Lüfters der Fig. 1 ohne Gehäuse, Lüfterrad und Lüfterradmutter;
- Fig. 18: eine Seitenansicht des Lüfters der Fig. 1 ohne Gehäuse, Lüfterrad und Lüfterradmutter;
- Fig. 19: eine frontale Ansicht von hinten auf den Luftauslassbereich des Lüfters der Fig. 1 ohne Gehäuse, Lüfterrad und Lüfterradmutter
- Fig. 20: eine zentrale Schnittansicht in der in der Fig. 21 angegebenen Ebene XX-XX des Lüfters der Fig. 1 ohne Gehäuse;
- Fig. 21: eine frontale Ansicht von vorne auf den Lufteinlassbereich des Lüfters der Fig. 1 ohne Gehäuse;
- Fig. 22: eine frontale Ansicht von vorne auf den Lufteinlassbereich des Lüfters der Fig. 1 ohne Gehäuse, Lüfterrad und Lüfterradmutter;
- Fig. 23: eine zentrale Schnittansicht in der in der Fig. 22 angegebenen Ebene XXIII-XXIII des Lüfters der Fig. 1 ohne Gehäuse, Lüfterrad und Lüfterradmutter;
- Fig. 24: eine perspektivische Ansicht eines Lüfters gemäss einer zweiten erfindungsgemässen Ausführungsform;.
- Fig. 25: eine Seitenansicht des Lüfters der Fig. 24;
- Fig. 26: eine frontale Ansicht von vorne auf den Lufteinlassbereich des Lüfters der Fig. 24;
- Fig. 27: eine frontale Ansicht von hinten auf den Luftauslassbereich des Lüfters der Fig. 24; sowie
- Fig. 28: eine zentrale Schnittansicht des Lüfters der Fig. 24.

### BESCHREIBUNG BEVORZUGTER AUSFÜHRUNGSFORMEN

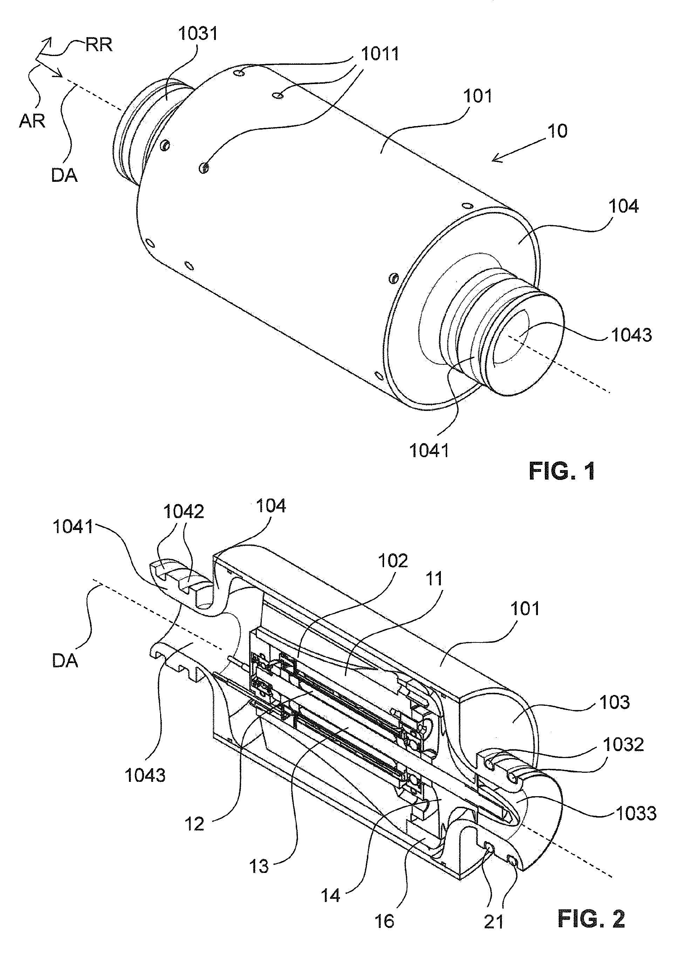

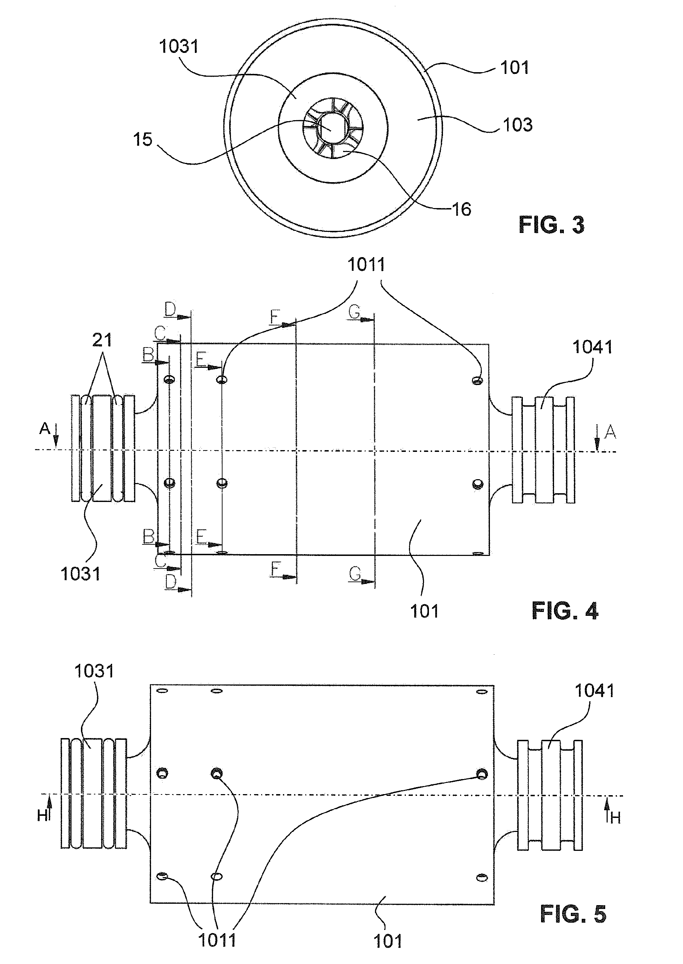

Die Figuren 1 bis 23 zeigen in unterschiedlichen Darstellungen eine erste Ausführungsform eines erfindungsgemässen Lüfters.

Wie in der Figur 1 gut erkennbar ist, hat der Lüfter eine insgesamt sehr kompakte Ausgestaltung. Der Lüfter weist ein Gehäuse 10 auf, welches eine hohlzylindrische Aussenwand 101 sowie einen Einlassdeckel 103 und einen Auslassdeckel 104 umfasst (Figur 2). Der Einlassdeckel 103 und der Auslassdeckel 104 verschliessen den durch die Aussenwand 101 gebildeten Zylinder zu beiden Seiten nach aussen hin.

Der Einlassdeckel 103 weist einen Anschlussstutzen 1031 auf, welcher eine Einlassöffnung 1033 begrenzt, und der Auslassdeckel 104 weist einen Anschlussstutzen 1041 auf, welcher eine Auslassöffnung 1043 begrenzt. Die Aussenwand 101, der Einlassdeckel 103 und der Auslassdeckel 104 begrenzen gemeinsam einen Hohlraum 102 des Lüfters. Während die Einlassöffnung 1033 dazu dient, Luft von aussen in den Hohlraum 102 einströmen zu lassen, dient die Auslassöffnung 1043 dazu, die Luft wieder aus dem Hohlraum 102 nach aussen hin strömen zu lassen.

Der Hohlraum 102 ist mit Ausnahme der Einlassöffnung 1033 und der Auslassöffnung 1043 vollständig durch das Gehäuse 10 nach aussen hin verschlossen. Die Aussenwand 101 und die Anschlussstutzen 1031 und 1041 sind jeweils konzentrisch zu einer Drehachse DA des Lüfters angeordnet. Aufgrund der Drehachse DA sind eine Axialrichtung AR sowie eine Radialrichtung RR des Lüfters definiert.

Die Aussenwand 101 des Gehäuses 10 weist einige Radialbohrungen 1011 auf, welche zum Festschrauben der im Hohlraum 102 angeordneten Lüfterbestandteile dienen.

Die beiden Anschlussstutzen 1031 und 1041 weisen jeweils auf ihrer radialen Aussenseite Aussenrillen 1032 bzw. 1042 auf, in welche Dichtungsringe 21 eingesetzt sein können. Die Anschlussstutzen 1031 und 1041 können dadurch je nach Anwendung zum luftdichten Anschliessen weiterer Vorrichtungen dienen, wie zum Beispiel von Luftschläuchen oder von anderen, beliebig ausgestalteten Anschlussvorrichtungen.

Die zum Hohlraum 102 hin gewandten Innenflächen des Einlassdeckels 103 und des Auslassdeckels 104 gehen in Axialrichtung AR jeweils bündig in die Innenfläche der Aussenwand 101 über. In Axialrichtung AR zur Einlassöffnung 1033 und zur Auslassöffnung 1043 hin verengt sich der Hohlraum 102 im Bereich des Einlassdeckels 103 sowie des Auslassdeckels 104 jeweils kontinuierlich bis zum jeweiligen Anschlussstutzen 1031 bzw. 1041, welcher im Bereich der Einlassöffnung 1033 bzw. der Auslassöffnung 1043 eine jeweils zylindrische Innenfläche aufweist. Die Innenflächen der Anschlussstutzen 1031 und 1041 weiten sich jeweils an den nach aussen mündenden Enden nach aussen hin auf. Aufgrund dieser insgesamt kontinuierlichen, das heisst stetigen Verläufe der Innenflächen des Gehäuses 10 können optimale aerodynamische Werte erreicht werden.

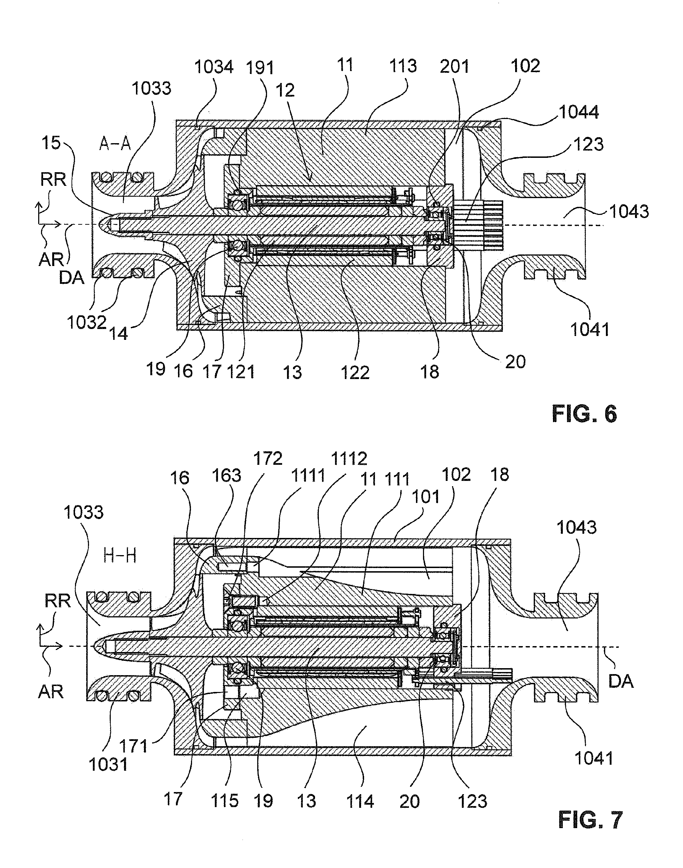

Wie zum Beispiel in der Figur 6 erkennbar ist, sind an den Aussenseiten des Einlassdeckels 103 und des Auslassdeckels 104 umlaufende Rillen 1034 bzw. 1044 vorgesehen, in welche jeweils ein O-Ring eingesetzt werden kann. Die Aussenwand 101 kann dadurch gegenüber dem Einlassdeckel 103 und dem Auslassdeckel 104 abgedichtet werden.

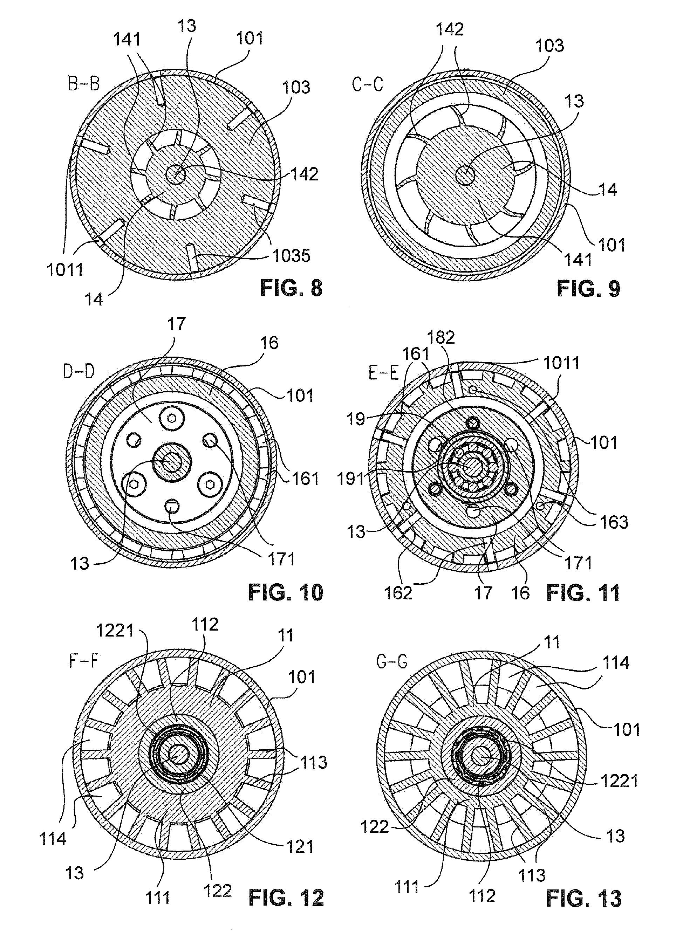

Im Einlassdeckel 103 sind Radialbohrungen 1035 vorgesehen (Figur 8), welche gemeinsam mit entsprechenden Radialbohrungen 1011 der Aussenwand 101 zum Verschrauben des Einlassdeckels 103 und der Aussenwand 101 dienen. Entsprechende Radialbohrungen sind auch am Auslassdeckel 104 vorgesehen, jedoch in den Figuren nicht sichtbar.

Wie in der Figur 2 erkennbar ist, sind im Hohlraum 102 jeweils konzentrisch zur Drehachse DA ein Kühlkörper 11, ein Motor 12, eine Antriebswelle 13, ein Lüfterrad 14 und ein Diffusor 16 angeordnet.

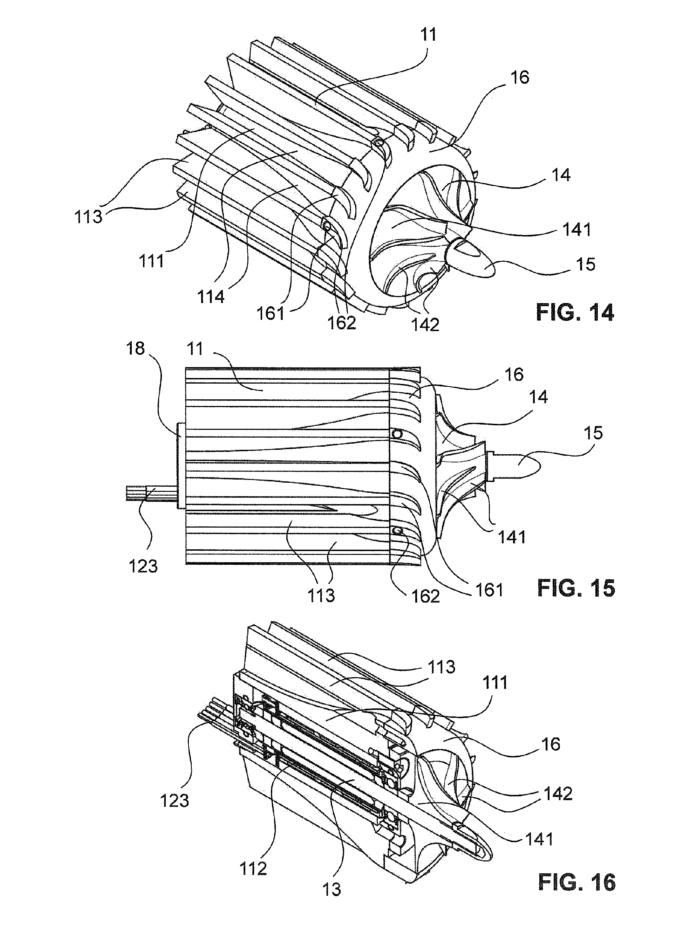

Die Ausgestaltung des Kühlkörpers 11 ist insbesondere in den Figuren 14 bis 19 gut erkennbar. Der Kühlkörper 11 weist eine Innenwand 111 auf, welche eine hohlzylindrische Innenfläche hat, die einen Innenraum 112 des Kühlkörpers 11 in Radialrichtung RR begrenzt. Der Innenraum 112 wird in Axialrichtung AR von der Antriebswelle 13 durchsetzt und dient zur Aufnahme des Motors 12.

Wie beispielsweise aus der Figur 7 gut erkennbar ist, nimmt die Wandstärke der Innenwand 111 in Axialrichtung AR in Richtung von der Einlassöffnung 1033 zur Auslassöffnung 1043 hin kontinuierlich ab. Da die Innenfläche der Innenwand 111 hohlzylindrisch ist, nimmt somit der Durchmesser der Aussenfläche der Innenwand 111 in Axialrichtung AR mit zunehmendem Abstand von der Einlassöffnung 1033 kontinuierlich und im mathematischen Sinne stetig ab. Der zwischen der Aussenfläche der Innenwand 111 und der Innenfläche der Aussenwand 101 vorhandene Freiraum des Hohlraums 102, welcher einen Strömungsraum für die den Lüfter durchströmende Luft bildet, vergrössert sich dadurch in Axialrichtung AR zur Auslassöffnung 1043 hin.

Auf der Aussenfläche der Innenwand 111 ist in regelmässigen Abständen entlang der Umfangsrichtung eine Vielzahl von rippenförmigen Luftleitelementen 113 ausgebildet, welche sich jeweils geradlinig und parallel zur Drehachse DA über die gesamte Längserstreckung des Kühlkörpers 11 erstrecken. Zwischen den Luftleitelementen 113 sind Luftleitkanäle 114 vorgesehen, welche jeweils in Umfangsrichtung zu beiden Seiten hin von einem der Luftleitelemente 113 begrenzt sind. Aufgrund des in Richtung zur Auslassöffnung 1043 hin abnehmenden Durchmessers der Aussenfläche der Innenwand 111 weisen die Luftleitkanäle 114 jeweils in dieselbe Richtung eine zunehmende Tiefe auf.

Die Luftleitelemente 113 dienen insbesondere auch als Kühlrippen zum Übertragen von thermischer Energie aus dem Innenraum 112 des Kühlkörpers 11 auf die die Luftleitkanäle 114 in Axialrichtung AR durchströmende Luft. Die im Innenraum 112 entstandene thermische Energie kann dadurch nach aussen hin abgeführt werden.

Die Luftleitkanäle 114 sind in Radialrichtung RR jeweils von der Innenwand 111 des Kühlkörpers 11 und von der Aussenwand 101 des Gehäuses 10 und in Umfangsrichtung von jeweils zwei Luftleitelementen 113 begrenzt. Dadurch, dass die Luftleitkanäle 114 also entlang ihrer gesamten Längserstreckung lediglich von durchgehend glatten Oberflächen begrenzt sind, kann sich im Lüfterbetrieb in diesen eine laminare und somit aerodynamisch optimale und widerstandsfreie Luftströmung ausbilden.

Um eine optimale Wärmeabführung zu gewährleisten, sind die Luftleitelemente 113 vorteilhaft einstückig mit der Innenwand 111 und aus demselben gut wärmeleitenden Material wie diese ausgebildet. Es hat sich gezeigt, dass optimale aerodynamische Werte bei einer gleichzeitig genügend effizienten Wärmeabführung erreicht werden, wenn der Kühlkörper 11 zwischen 10 und 26, insbesondere zwischen 14 und 22, und am bevorzugtesten, wie hier, genau 18 Luftleitelemente 113 aufweist, die in regelmässigen Abständen entlang der Umfangsrichtung angeordnet sind.

In Radialrichtung RR liegen die Luftleitelemente 113 bevorzugt entlang ihrer gesamten Längserstreckung an der Innenfläche der Aussenwand 101 an, so dass Wärmeenergie nicht nur auf die die Luftleitkanäle 114 durchströmende Luft, sondern auch auf das Gehäuse 10 übertragen werden kann (Figuren 12 und 13).

Wie zum Beispiel aus der Figur 7 ersichtlich ist, weist der Kühlkörper 11 in der zur Einlassöffnung 1033 hin gewandten Stirnfläche der Innenwand 111 erste Axialbohrungen 1111 zur Befestigung des Diffusors 16 auf. Ebenfalls in der zur Einlassöffnung 1033 hin gewandten Stirnfläche der Innenwand 111 sind zudem zweite Axialbohrungen 1112 vorgesehen. Die zweiten Axialbohrungen 1112 dienen zur Befestigung eines ersten Lagerschildes 17 via entsprechend in diesem vorgesehene Axialbohrungen 172.

Der erste Lagerschild 17 dient zusammen mit einem zweiten Lagerschild 18, welcher auf der zur Auslassöffnung 1043 hin gewandten Seite des Kühlkörpers 11 angeordnet ist, zur Lagerung einer Antriebswelle 13. Der erste und der zweite Lagerschild 17 und 18 sind somit wie das Gehäuse 10, der Kühlkörper 11 und der Diffusor 16 feststehend. Zur Lagerung der Antriebswelle 13 ist im ersten Lagerschild 17 ein erstes Kugellager 19 und im zweiten Lagerschild 18 ein zweites Kugellager 20 angebracht. Beide Kugellager 19 und 20 sind vorgespannt. Zwischen dem ersten und zweiten Lagerschild 17 bzw. 18 und der jeweiligen radialen Aussenseite der Kugellager 19 und 20 ist jeweils ein O-Ring 191 bzw. 201 vorgesehen, wodurch eine optimale Vibrationsdämpfung erreicht wird.

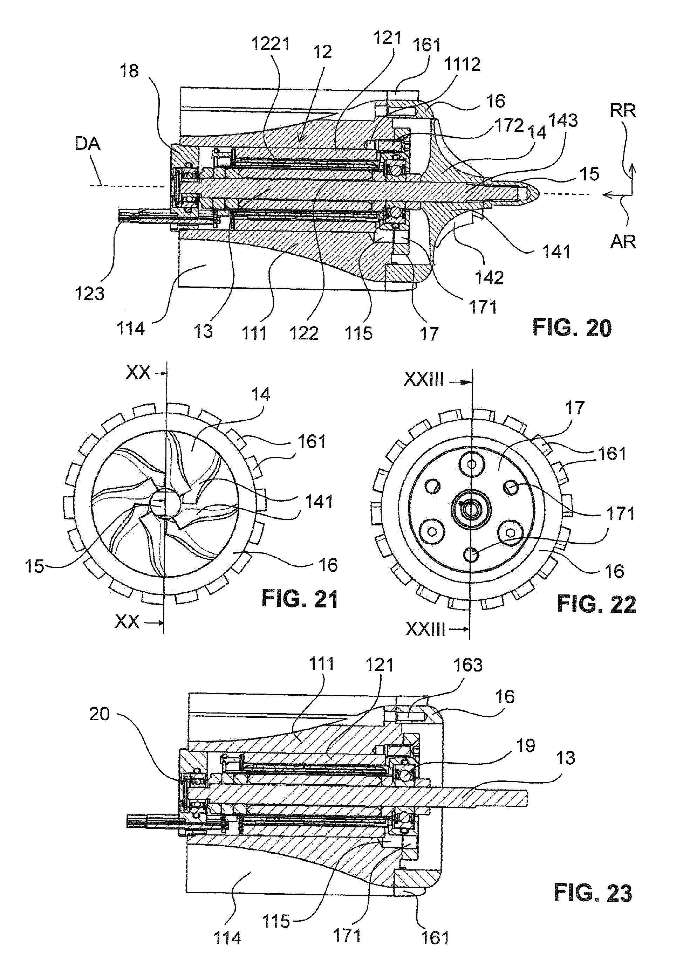

Um zu verhindern, dass während des Lüfterbetriebs bei sehr hohen Umdrehungsgeschwindigkeiten das Lagerfett aus den Kugellagern 19 und 20 hinaus gepresst wird, sind im ersten Lagerschild 17 axiale Druckausgleichsbohrungen 171 vorgesehen. Die Druckausgleichsbohrungen 171 korrespondieren mit Druckausgleichsaussparungen 115, welche im Bereich der zur Einlassöffnung 1033 hin gewandten Stirnfläche der Innenwand 111 des Kühlkörpers vorgesehen sind (Figuren 22 und 23). Die Druckausgleichsbohrungen 171 bilden zusammen mit den Druckausgleichsaussparungen 115 eine Verbindung zwischen dem Innenraum 112 des Kühlkörpers 11 und dem den Kühlkörper 11 umgebenden Teil des Hohlraums 102 des Gehäuses 10. Diese Verbindung gewährleistet, dass in Axialrichtung AR auf beiden Seiten der Kugellager 19 und 20 jeweils ein im Wesentlichen identischer oder zumindest ähnlicher Druck herrscht.

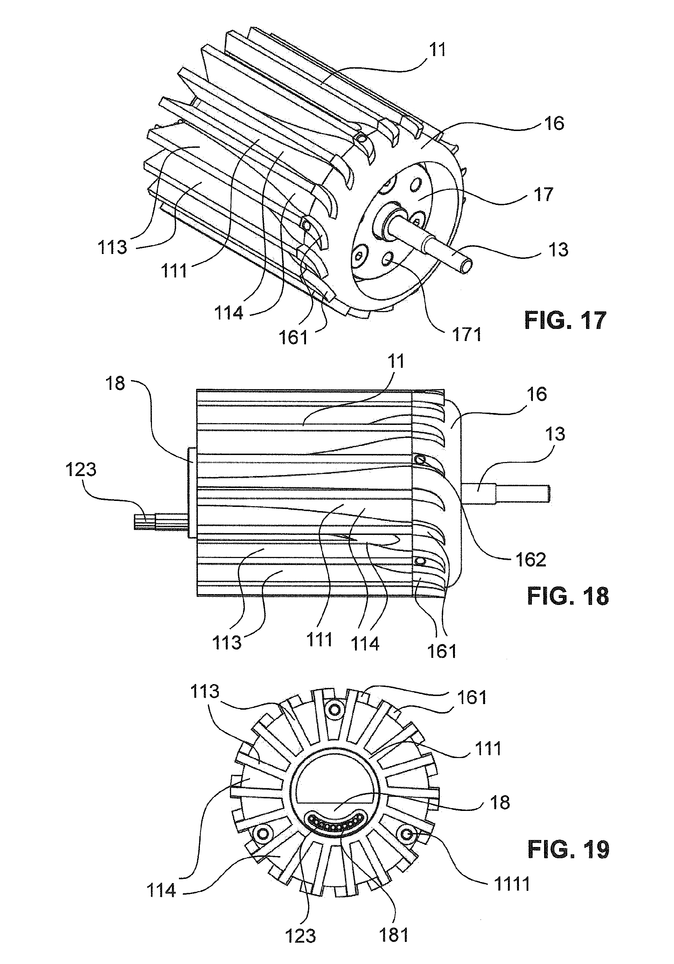

Der zweite Lagerschild 18 weist eine nierenförmige Durchführöffnung 181 auf, durch welche Anschlusskabel 123 des Motors 12 hindurch geführt werden können (Figuren 7 und 19).

An der Antriebswelle 13 ist drehfest ein Rotor 121 des Motors 12 angebracht. Konzentrisch ausserhalb des Rotors 121 ist ein Stator 122 mit einer Statorwicklung 1221 vorgesehen. Die Statorwicklung 1221 stellt eine im Betrieb stromdurchflossene Wicklung dar. In der Statorwicklung 1221 sowie in den daran angrenzenden Statorbereichen wird im Lüfterbetrieb ein Grossteil der abzuführenden thermischen Energie produziert. Beim Motor 12 handelt es sich um einen bürstenlosen Gleichstrommotor, welcher vollständig im Innenraum 112 des Kühlkörpers 11 aufgenommen ist. Der Motor 12 und insbesondere der Stator 122 liegen mit ihren Aussenflächen an der Innenfläche der Innenwand 111 des Kühlkörpers an. Dadurch wird eine optimale Wärmeübertragung vom Motor 12 auf den Kühlkörper 11 erreicht. Da sich die Luftleitelemente 113 des Kühlkörpers 11 in Axialrichtung AR über die gesamte Längserstreckung des Motors 12 und insbesondere des Stators 122 und sogar darüber hinaus erstrecken, kann die im Motor 12 produzierte thermische Energie optimal abgeführt werden.

Bei dem in der vorliegenden Ausführungsform verwendeten Motor handelt es sich um einen Elektromotor wie er in der EP 2 180 581 gezeigt und beschrieben ist. Entsprechend der Offenbarung der EP 2 180 581 weist die Statorwicklung 1221 insbesondere mehrere rhombische Einzelspulen auf, die aus Flachdraht hergestellt sind und einander dachziegelartig überlappen, was auch aus der Figur 13 erkennbar ist.

In Axialrichtung AR auf der ungefähren Höhe des Einlassdeckels 103 ist das Lüfterrad 14 drehfest an der Antriebswelle 13 angebracht. Das Lüfterrad 14 ist ähnlich ausgestaltet wie ein Verdichterrad eines Turboladers und weist einen rotationssymmetrischen Grundkörper mit einer zentralen Durchgangsöffnung 143 auf. Das Lüfterrad 14 kann daher auch als Verdichterrad bezeichnet werden. Der die Durchgangsöffnung 143 definierende Innendurchmesser des Grundkörpers ist nur geringfügig grösser als der Aussendurchmesser der Antriebswelle 13, welche durch die Durchgangsöffnung 143 hindurch ragt. An seinem zur Einlassöffnung 1033 hin gewandten Ende weist der Grundkörper 141 einen Aussendurchmesser auf, der nur wenig grösser als sein Innendurchmesser ist. In Axialrichtung AR zum Kühlkörper 11 hin vergrössert sich der Aussendurchmesser des Grundkörpers 141 aber stetig und mit einem zu einer exponentiellen Funktion ähnlichen Anstieg.

Auf der zum Einlassdeckel 103 hin gewandten Seite sind am Grundkörper 141 in regelmässigen Abständen entlang der Umfangsrichtung mehrere Lüfterschaufeln 142 angebracht. Die Lüfterschaufeln 142 dienen zur Beförderung der Luft, indem das Lüfterrad 14 vom Motor 12 rotiert wird und dadurch Luft durch die Einlassöffnung 1033 in den Hohlraum 102 angesaugt und via die Luftleitkanäle 114 durch die Auslassöffnung 1043 wieder nach aussen hin ausgestossen wird.

Bevorzugt sind 6 bis 10, oder wie hier genau 8 Lüfterschaufeln vorgesehen, welche vorteilhaft einstückig mit dem Grundkörper 141 ausgebildet sind. In der Ansicht der Figur 21 frontal von vorne auf den Lufteinlassbereich des Lüfters sind die Lüfterschaufeln 142 jeweils S-förmig ausgestaltet und erstrecken sich von dem an die Antriebswelle 13 angrenzenden Bereich des Grundkörpers 141 leicht schräg zur Radialrichtung RR bis zum peripheren Bereich des Grundkörpers 141 nach aussen hin.

Das Lüfterrad 14 ist drehfest mittels einer Lüfterradmutter 15, welche auf das im Bereich der Einlassöffnung 1022 angeordnete Ende der Antriebswelle 13 aufgeschraubt ist, an der Antriebswelle 13 und somit am Rotor 121 befestigt. Die Lüfterradmutter 15 ist derart ausgestaltet, dass ihre Aussenfläche in Axialrichtung AR bündig in die Aussenfläche des Grundkörpers 141 des Lüfterrades 14 übergeht. Nach aussen zur Einlassöffnung 1033 hin weist die Lüfterradmutter 15 ein spitz zulaufendes Ende auf.

Bei einer Rotation des Lüfterrades 14 wird Luft in Axialrichtung AR durch die Einlassöffnung 1033 angesogen und von den Lüfterschaufeln 142 zunächst in Axialrichtung AR zum Kühlkörper 11 hin und dann in Radialrichtung RR nach aussen hin befördert.

Eine Umlenkung der vom Lüfterrad 14 radial nach aussen hin beförderten Luft in die Axialrichtung AR erfolgt aufgrund der Form der Innenfläche des Einlassdeckels 103 und dann aufgrund der die weitere Strömungsrichtung bestimmende Innenfläche der Aussenwand 101.

In Axialrichtung AR zwischen dem Lüfterrad 14 und dem Kühlkörper 11 ist der Diffusor 16 angeordnet. Der Diffusor 16 dient dazu, die vom Lüfterrad 14 beförderte Luft in die Luftleitkanäle 114 des Kühlkörpers 11 zu leiten. Der Diffusor 16 dient somit insbesondere dazu, die Luftströmung, welche unmittelbar nach dem Lüfterrad 14 noch eine in die Umfangsrichtung weisende Richtungskomponente aufweist, in eine Luftströmung umzuleiten, welche eine ausschliesslich in die Axialrichtung AR weisende Richtungskomponente aufweist. Der Diffusor 16 weist hierzu Leitschaufeln 161 auf, welche zur Vermeidung von Luftverwirbelungen in Axialrichtung AR zum Lüfterrad 14 hin ein jeweils spitz zulaufendes Ende haben. Die Leitschaufeln 161 sind zu diesen Enden hin jeweils entgegen der bestimmungsgemässen Rotationsrichtung des Lüfterrades 14 leicht in die Umfangsrichtung gebogen. Zum Kühlkörper 11 hin verlaufen die Leitschaufeln 161 jeweils zunehmend parallel zur Drehachse DA.

Um einen möglichst geringen Luftwiderstand zu erreichen, ist jedem der Luftleitelemente 113 des Kühlkörpers 11 jeweils eine Leitschaufel 161 des Diffusors 16 zugeordnet, die in Axialrichtung AR an das entsprechende Luftleitelement 113 anliegt und zu allen Seiten hin bündig in dieses übergeht.

Der Diffusor 16 weist einige Radialbohrungen 162 auf, welche zum Verschrauben des Diffusors 16 mit der Aussenwand 101 via entsprechende, in der Aussenwand 101 vorgesehene Radialbohrungen 1011 dienen (Figuren 11 und 15). Ausserdem sind im Diffusor 16 mehrere Axialbohrungen 163 vorgesehen, um den Diffusor 16 via die Axialbohrungen 1111 mit dem Kühlkörper 11 zu verschrauben (Figuren 7 und 11).

Im Betrieb des Lüfters wird somit das Lüfterrad 14 durch den Motor 12 in eine Rotationsbewegung um die Drehachse DA versetzt. Dadurch wird von den Lüfterschaufeln 142 Luft durch die Einlassöffnung 1033 hindurch angesaugt und in Axialrichtung AR sowie dann in Radialrichtung RR nach aussen hin befördert. Aufgrund der gebogenen Form der Innenfläche des Einlassdeckels 103 in dem unmittelbar an den peripheren Bereich des Lüfterrades 14 angrenzenden Bereich wird die angesaugte Luft wieder in die Axialrichtung AR umgelenkt. Im Bereich, in welchem die Luft von der Radial- in die Axialrichtung umgelenkt wird, ist der Diffusor 16 angeordnet. Dieser im Hochdruckbereich des Lüfters angeordnete Diffusor 16 lenkt den Luftstrom, welcher unmittelbar nach dem Lüfterrad 14 noch eine in Umfangsrichtung weisende Richtungskomponente aufweist, in einen rein in die Axialrichtung AR strömenden Luftstrom um. Vom Diffusor 16 wird die Luft in die Luftleitkanäle 114 des Kühlkörpers 11 geleitet, wo eine von durchgehend glatten Flächen begrenzte, weitgehend laminare Luftströmung entstehen kann. Durch das Entlangströmen an der Innenwand 111 und an den Luftleitelementen 113 wird thermische Energie vom Kühlkörper 11 auf die durch die Luftleitkanäle 114 strömende Luft übertragen und somit abgeführt, wodurch eine äusserst effiziente Motorkühlung bei gleichzeitig optimaler Aerodynamik bewirkt wird. Aufgrund des abnehmenden Aussendurchmessers der Innenwand 111 vertiefen sich die Luftleitkanäle 114 in Axialrichtung AR zum Auslassdeckel 104 hin zunehmend, was sich ebenfalls positiv auf die Aerodynamik auswirkt. Im Bereich des Auslassdeckels 104 tritt die Luft aus den Luftleitkanälen 114 aus. Dieser Bereich kann als Tiefdruckbereich des Lüfters bezeichnet werden. Durch die Auslassöffnung 1043 hindurch gelangt die Luft schliesslich wieder nach aussen.

Die in den Figuren 1 bis 23 gezeigte Ausführungsform kann für Umdrehzahlen von bis zu 150'000/min ausgelegt sein. Dabei kann ein Differenzdruck von 500mbar und mehr erreicht werden, wobei der dabei gemessene Schall und die entstandenen Vibrationen minimal sind. Der Lüfter kann aber auch für Umdrehzahlen von bis zu 400'000/min bei einem Differenzdruck von 2000mbar ausgelegt werden. Die Baugrösse des Lüfters kann in Bezug auf die Aussenwand 101 mit 55mm Aussendurchesser und 130mm Länge angegeben werden.

Um einen hohen Luftdruck oder -unterdruck auch bei verhältnismässig tiefen Umdrehzahlen zu erreichen, können mehrere erfindungsgemässe Lüfter in Serie hintereinander angeordnet werden. Für einen hohen Luftdurchsatz können mehrere erfindungsgemässe Lüfter parallel zueinander angeordnet werden.

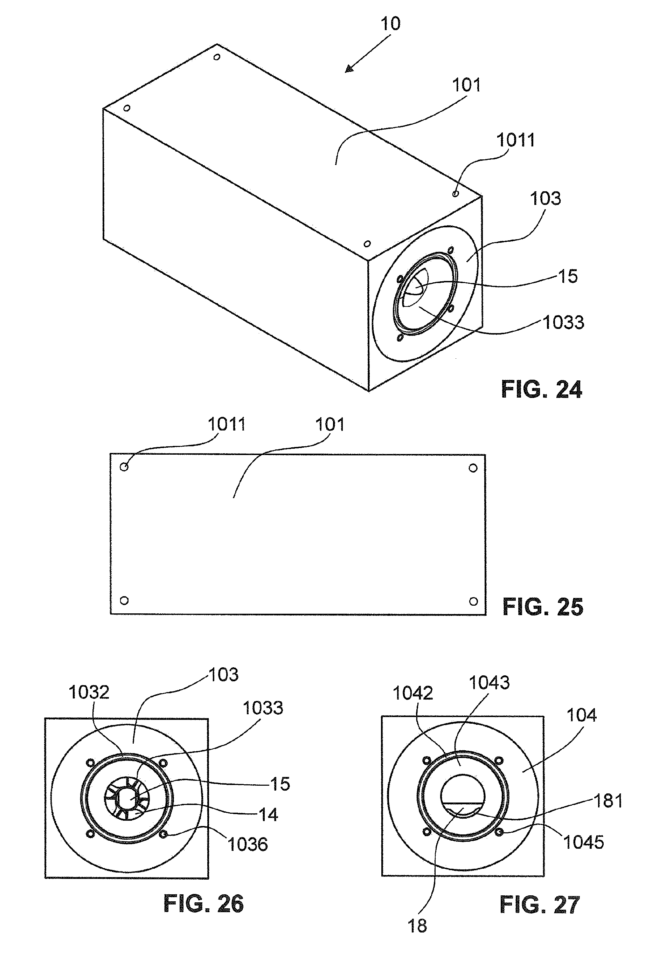

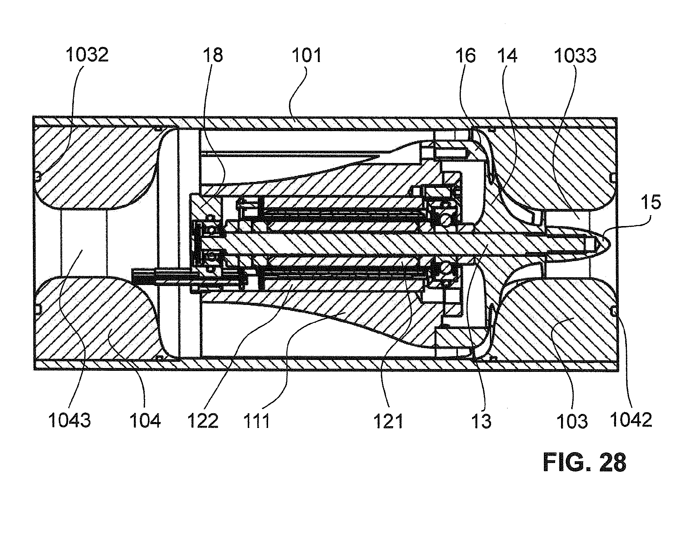

Eine zweite Ausführungsform eines erfindungsgemässen Lüfters ist in den Figuren 24 bis 28 gezeigt. Elemente des Lüfters, welche dieselbe oder eine ähnliche Funktion wie bei der in den Figuren 1 bis 23 gezeigten Ausführungsform aufweisen, sind jeweils mit demselben Bezugszeichen wie in den Figuren 1 bis 23 versehen.

Im Gegensatz zu der in den Figuren 1 bis 23 gezeigten Ausführungsform weist der Lüfter hier ein Gehäuse 10 mit einer Aussenwand 101 auf, deren nach aussen hin gewandte Aussenfläche im Querschnitt quadratisch ist. Da bei der vorliegenden Ausführungsform ausserdem keine Anschlussstutzen in den Lufteinlass- bzw. Luftauslassbereichen vorgesehen sind, ist die Gestalt des Lüfters insgesamt quaderförmig. Der Lüfter ist dadurch sehr kompakt ausgebildet und optimal für einen modulartigen Einbau geeignet. Zum Anschliessen von zum Beispiel eines Luftschlauches an den Einlass- bzw. Auslassbereich des Lüfters kann beispielsweise jeweils eines oder mehrere Innengewinde 1036, 1045 im Bereich der Einlassöffnung 1033 bzw. der Auslassöffnung 1043 vorgesehen sein. Die Abdichtung zwischen dem Lüfter und dem Luftschlauch oder einem anderen Anschlusselement erfolgt durch O-Ringe, welche in entsprechend vorgesehenen Aussenrillen 1032 bzw. 1042 eingelegt sind.

Lüfterrad 14, Diffusor 16, Kühlkörper 11 und Motor 12 sind vorteilhaft jeweils im Wesentlichen identisch wie bei der in den Figuren 1 bis 23 gezeigten Ausführungsform ausgebildet. Die Aussenwand 101 des Gehäuses 10 weist im Querschnitt zwar eine quadratische Aussenfläche auf. Die Innenfläche der Aussenwand 101 ist jedoch vorteilhaft hohlzylindrisch, das heisst im Querschnitt kreisrund. Die Verengungen des Strömungsraums in den Bereichen der Einlassöffnung 1033 und der Auslassöffnung 1043 werden durch entsprechende Gestaltung des Einlassdeckels 103 und des Auslassdeckels 104 erreicht. Sowohl der Einlassdeckel 103 als auch der Auslassdeckel 104 weisen hier jeweils eine im Querschnitt quadratische Aussenfläche und eine kreisrunde Innenfläche auf. Der Einlassdeckel 103 und der Auslassdeckel 104 sind jeweils via Bohrungen 1011, welche in der Aussenwand 101 vorgesehen sind, am Gehäuse 10 angebracht.

**BEZUGSZEICHENLISTE**

| | | | |
|---|---|---|---|
| 10 | Gehäuse | 1036 | Innengewinde |
| 101 | Aussenwand | 104 | Auslassdeckel |
| 1011 | Radialbohrungen | 1041 | Anschlussstutzen |
| 102 | Hohlraum | 1042 | Aussenrillen |
| 103 | Einlassdeckel | 1043 | Auslassöffnung |
| 1031 | Anschlussstutzen | 1044 | Rille |
| 1032 | Aussenrillen | 1045 | Innengewinde |
| 1033 | Einlassöffnung | | |
| 1034 | Rille | 11 | Kühlkörper |
| 1035 | Radialbohrungen | 111 | Innenwand |
| 1111 | Erste Axialbohrungen | 16 | Diffusor |
| 1112 | Zweite Axialbohrungen | 161 | Leitschaufeln |
| 112 | Innenraum | 162 | Radialbohrungen |
| 113 | Luftleitelemente | 163 | Axialbohrungen |
| 114 | Luftleitkanäle | | |
| 115 | Druckausgleichsaussparung | 17 | Erster Lagerschild |
| | | 171 | Druckausgleichsbohrungen |
| 12 | Motor | 172 | Axialbohrungen |
| 121 | Rotor | | |
| 122 | Stator | 18 | Zweiter Lagerschild |
| 1221 | Statorwicklung | 181 | Durchführöffnung |
| 123 | Anschlusskabel | | |
| | | 19 | Erstes Kugellager |
| 13 | Antriebswelle | 191 | O-Ring |
| | | 20 | Zweites Kugellager |
| 14 | Lüfterrad | 201 | O-Ring |
| 141 | Grundkörper | | |
| 142 | Lüfterschaufeln | 21 | Dichtungsringe |
| 143 | Durchgangsöffnung | | |
| | | DA | Drehachse |
| 15 | Lüfterradmutter | RR | Radialrichtung |
| | | AR | Axialrichtung |

## Patentansprüche

1. Lüfter aufweisend
einen elektrisch angetriebenen Motor (12) mit einem Stator (122) und einem um eine Drehachse (DA) drehbar gelagerten Rotor (121), wobei aufgrund der Drehachse (DA) eine Radial- und eine Axialrichtung (RR, AR) des Lüfters definiert sind, und wobei der Motor (12) zumindest eine im Betrieb stromdurchflossene Wicklung (1221) aufweist;
ein drehfest am Rotor (121) befestigtes Lüfterrad (14) zum Ansaugen und Befördern von einem gasförmigen Medium;
einen Kühlkörper (11) mit einer Innenwand (111), welche einen Innenraum (112) zur Aufnahme des Motors (12) begrenzt, sowie mit Luftleitelementen (113), welche sich jeweils in Axialrichtung (AR) über einen Grossteil der Längserstreckung der stromdurchflossenen Wicklung (1221) erstrecken, um das vom Lüfterrad (14) beförderte gasförmige Medium zwecks Motorkühlung am Kühlkörper (11) entlang zu leiten; sowie
ein Gehäuse (10) mit einer Aussenwand (101), welche einen Hohlraum (102) zur Aufnahme des Kühlkörpers (11) und des Motors (12) begrenzt.

2. Lüfter nach Anspruch 1, wobei sich die Luftleitelemente (113) jeweils in Axialrichtung (AR) über einen Grossteil der Längserstreckung des Stators (122), insbesondere über die gesamte Längserstreckung des Stators (122), erstrecken.

3. Lüfter nach Anspruch 1 oder 2, wobei die Innenwand (111) des Kühlkörpers (11) den Stator (122) entlang seiner gesamten Längserstreckung radial umschliesst.

4. Lüfter nach einem der vorhergehenden Ansprüche, wobei sich die Luftleitelemente (113) jeweils geradlinig entlang der Axialrichtung (AR) erstrecken.

5. Lüfter nach einem der vorhergehenden Ansprüche, wobei das Lüfterrad (14) dazu ausgebildet ist, das angesaugte gasförmige Medium radial nach aussen zu befördern.

6. Lüfter nach einem der vorhergehenden Ansprüche, wobei entlang der Axialrichtung (AR) zwischen dem Lüfterrad (14) und dem Kühlkörper (11) ein Diffusor (16) vorgesehen ist, um das vom Lüfterrad (14) beförderte gasförmige Medium in die Axialrichtung (AR) zum Kühlkörper (11) hin umzulenken.

7. Lüfter nach Anspruch 6, wobei der Diffusor (16) Leitschaufeln (161) aufweist, welche jeweils ein zum Lüfterrad (14) hin gewandtes Ende mit einer spitz zulaufenden Kante aufweisen.

8. Lüfter nach Anspruch 6 oder 7, wobei jedem der Luftleitelemente (113) des Kühlkörpers (11) eine Leitschaufel (161) zugeordnet ist, und wobei die Luftleitelemente (113) jeweils in Axialrichtung (AR) an die Leitschaufeln (161) anschliessen und bündig in diese übergehen.

9. Lüfter nach einem der vorhergehenden Ansprüche, wobei es sich beim elektrisch angetriebenen Motor (12) um einen bürstenlosten Gleichstrommotor handelt.

10. Lüfter nach einem der vorhergehenden Ansprüche, wobei zur Lagerung des Rotors (121) zumindest ein in einem Lagerungselement (17) befestigtes Lager (19) vorgesehen ist, und wobei das Lagerungselement (17) zumindest eine Druckausgleichsbohrung (171) aufweist, um einen Druckausgleich zum Lager (19) hin zu ermöglichen.

11. Lüfter nach einem der vorhergehenden Ansprüche, wobei die Innenwand (111) des Kühlkörpers (11) eine Aussenfläche aufweist, deren Durchmesser in Axialrichtung (AR) mit zunehmendem Abstand vom Lüfterrad (14) kontinuierlich abnimmt.

12. Lüfter nach Anspruch 11, wobei der Durchmesser der Aussenfläche der Innenwand (111) entlang der im Wesentlichen gesamten Längserstreckung der Innenwand (111) in Axialrichtung (AR) mit zunehmendem Abstand vom Lüfterrad (14) kontinuierlich abnimmt.

13. Lüfter nach einem der vorhergehenden Ansprüche, wobei die Aussenwand (101) des Gehäuses (10) eine zylindrische Innenfläche aufweist.

14. Lüfter nach einem der vorhergehenden Ansprüche, wobei das Gehäuse (10) einen Lufteinlass (1033) aufweist, welcher sich in Axialrichtung (AR) zum Lüfterrad (14) hin stetig aufweitet, und/oder einen Luftauslass (1043) aufweist, welcher sich in Axialrichtung (AR) vom Lüfterrad (14) weg stetig verengt.

15. Lüfter nach einem der vorhergehenden Ansprüche, wobei vom Gehäuse (10), dem Lüfterrad (14), dem Diffusor (16) und dem Kühlkörper (11) gemeinsam ein Strömungsraum begrenzt wird, welcher im Betrieb des Lüfters vom gasförmigen Medium entlang einer Hauptströmungsrichtung durchströmt wird, und welcher sich entlang der Hauptströmungsrichtung im Bereich des Lüfterrades (14) zum Diffusor (16) hin verengt und im Bereich des Kühlkörpers (11) mit zunehmendem Abstand vom Diffusor (16) aufweitet.
